# EUROPÄISCHE PATENTSCHRIFT

(11) **EP 2 414 191 B1**
(45) Veröffentlichungstag und Bekanntmachung des Hinweises auf die Patenterteilung: **21.03.2018**
(21) Anmeldenummer: 10712017.2
(22) Anmeldetag: 31.03.2010
(51) Int. Cl.: D04B 21/14, B60N 2/44

(54) **SITZ MIT EINER AUFLAGE UND VERFAHREN ZUR ANPASSUNG DER KONTUR DES SITZES**
SEAT WITH PAD AND METHOD FOR ADAPTING THE OUTLINE OF THE SEAT
SIÈGE AVEC UN ÉLÉMENT DE GARNISSAGE ET MÉTHODE D'ADAPTION DU CONTOUR DU SIÈGE

(30) Priorität: 02.04.2009 DE 102009016050
(43) Veröffentlichungstag der Anmeldung: 08.02.2012
(73) Patentinhaber: Bayerische Motoren Werke Aktiengesellschaft, 80809 München (DE)
(72) Erfinder: FRANZ, Matthias, 83098 Brannenburg (DE); DURT, Alexander, 82266 Inning (DE); KILINCSOY, Uemit, 80639 München (DE)
(86) Internationale Anmeldenummer: PCT/EP2010/002073
(87) Internationale Veröffentlichungsnummer: WO 2010/112218

(56) Entgegenhaltungen:
- WO-A1-96/02402
- DE-A1- 10 240 462
- DE-A1- 10 317 356
- DE-A1- 19 545 168
- DE-A1-102004 013 674
- DE-U1- 8 909 741
- US-A1- 2006 174 417
- US-A1- 2007 267 543

## Beschreibung

Die Erfindung betrifft einen Sitz mit wenigstens einer Auflage sowie Verfahren zur Anpassung der Kontur des Sitzes. Bekannte Sitze, beispielsweise in Kraftfahrzeugen, bestehen aus einer Tragstruktur sowie gepolsterten Auflagen, gegebenenfalls unter Zwischenschaltung weiterer Komponenten. Um die Ergonomie und den Komfort beispielsweise bei Fahrzeugsitzen zu verbessern, sind üblicherweise Verstellmöglichkeiten vorgesehen, um zum Beispiel die Neigung der Sitzfläche und/oder der Rückenlehne, die Breite der Rückenlehne etc. zu verändern. Außerdem können zusätzliche Einrichtungen, wie eine Lordosenstütze oder eine Massageeinrichtung, vorgesehen sein.

Die Verstellmöglichkeiten sollen eine bestmögliche Anpassung des Sitzes an die physiologisch individuelle Form der Wirbelsäule und des Bewegungsapparates des Sitzbenutzers realisieren, um einen möglichst guten Sitzkomfort zu gewährleisten. Ein Maximum an Komfort wird dann erreicht, wenn die Sitzfläche und die Rückenlehne möglichst kongruent und homogen mit der physiologischen Form des Menschen übereinstimmen.

Hierzu ist es beispielsweise aus der DE 10 2006 032 891 A1 bekannt, auf einer Tragstruktur eines Sitzes ein Polster mit einem losen Füllmaterial oder mit einem Fluid aufzulegen, das mit Hilfe magnetischer oder elektrischer Felder, durch das Anlegen elektrischen Stroms, durch Erwärmung oder durch hydraulische Anregung umverteilbar ist, um auf diese Weise die Form der Sitzfläche und der Rückenlehne an die physiologische Form des Sitzbenutzers anzupassen. Des Weiteren ist in der DE 695 05 131 T2 eine Auflage für einen Sitz beschrieben, die als so genanntes "Vakuumkissen" mit einem rieselfähigen Schüttgut ausgestaltet ist, wobei sich die Auflage an die Körperform des Sitzbenutzers anpassen kann, indem ein mehrschichtiges System durch Beaufschlagung mit Druckluft auf den Sitzbenutzer zubewegt wird.

Nachteilig bei den bekannten Systemen ist deren beträchtliches Bauvolumen und Gewicht.

Ferner ist aus der US2006/0174417A1 eine Auflage für einen Stuhl oder ein Bett bekannt. Die Auflage setzt sich aus drei aufblasbaren Kammern zusammen und ist mit einem Ventil zur Befüllung des Innenraums der Auflage versehen. Zwischen der oberen und der unteren aufblasbaren Kammer ist in einer dritten Kammer ein Abstandsgebilde angeordnet. Das Abstandsgebilde besteht aus einer ersten und einer zweiten Lage. Die beiden Lagen sind durch Abstandsfäden miteinander verbunden.

Aufgabe der Erfindung ist es, einen Sitz, insbesondere einen Sitz für ein Kraftfahrzeug, bereitzustellen, die sich durch einen einfachen Aufbau und ein geringes Gewicht bei geringem Bauraumbedarf auszeichnet.

Diese Aufgabe wird durch einen Sitz mit den Merkmalen des Anspruchs 1 erfüllt. Die Ansprüche 8 und 10 betreffen Verfahren zur Anpassung der Kontur eines erfindungsgemäßen Sitzes.

Grundgedanke der Erfindung gemäß Anspruch 1 ist es, ein an sich bekanntes Abstandsgebilde mit parallel zueinander angeordneten Lagen, die durch Abstandsfäden miteinander verbunden sind, in eine fluiddichte Hülle einzubringen und auf einer ungepolsterten Tragstruktur des Sitzes anzuordnen. Die Hülle weist eine Schlauchleitung oder einen Anschluss für eine Schlauchleitung auf, um die Menge des Fluids im Inneren der Hülle beeinflussen zu können.

Bevorzugt sind die parallel zueinander angeordneten Lagen als Gewirkelagen ausgebildet. Selbstverständlich kann das Abstandsgebilde jedoch anstelle von Gewirkelagen jede Art anderer geeigneter Materiallagen aufweisen, wie beispielsweise Gewebelagen.

Abstandsgebilde, wie oben beschrieben, sind beispielsweise aus der DE 90 16 062 U1, der EP 0 529 671 B1 und der DE 10 2006 023 357 A1 bekannt. Derartige textile Abstandsgebilde zeichnen sich durch ihre elastischen Polstereigenschaften bei einer Druckbelastung auf die Oberfläche des Gewirkes aus. Sie werden in mehrschichtig aufgebauten Matratzen, in Polsterbezügen und dergleichen eingesetzt.

Durch die erfindungsgemäße Integration der bekannten Abstandsgebilde in eine fluiddichte Hülle mit einem Anschluss für eine Schlauchleitung wird die Möglichkeit geschaffen, die Form des Abstandsgebildes, die sich unter der Belastung eines Sitzbenutzers ergibt, "einzufrieren", indem nach erfolgter Belastung der Auflage die Schlauchleitung abgesperrt wird bzw. ein Unterdruck im Inneren der Hülle aufgebracht wird. Somit kann mit einer vergleichsweise dünn gestalteten Auflage eine exakte Konturanpassung an die Körperform eines Sitzbenutzers erreicht werden, die sich von selbst durch das Einsitzen ergibt und nachfolgend fixiert wird. Soll auf dem Sitz ein anderer Sitzbenutzer Platz nehmen, wird die Fixierung der Auflage aufgehoben und eine neue Konturanpassung an die Körperform des nachfolgenden Sitzbenutzers vorgenommen.

Erfindungsgemäß wird die Auflage auf einer ungepolsterten Tragstruktur eines Sitzes angeordnet, insbesondere auf einer Tragstruktur, wie sie in der Patentanmeldung der Anmelderin mit dem Titel "Verfahrung zur Erzeugung einer Tragstruktur für einen Sitz" beschrieben ist. Der Offenbarungsgehalt dieser Patentanmeldung, die denselben Zeitrang wie die vorliegende Anmeldung hat, wird hiermit vollumfänglich in die vorliegende Anmeldung einbezogen.

Durch die Kombination einer gemäß der Patentanmeldung "Verfahrung zur Erzeugung einer Tragstruktur für einen Sitz" erzeugten Tragstruktur mit der erfindungsgemäßen Auflage wird ein körperkonturierter Sitz bereitgestellt, der einen sehr guten Sitzkomfort ermöglicht. In besonders vorteilhafter Weise ergibt sich der hohe Sitzkomfort bereits bei einer erfindungsgemäßen Auflage mit nur geringer Dicke, also geringem Abstand der beiden Gewirkelagen des Abstandsgebildes, da durch die Konturierung der Tragstruktur bereits eine Anpassung an die Körperform der in Frage kommenden Sitzbenutzer erreicht wird.

Eine Fixierung der durch einen Sitzbenutzer erzeugten Kontur einer Auflage kann erfindungsgemäß bereits dadurch erfolgen, dass eine Absperreinrichtung in der Schlauchleitung der Auflage aktiviert wird, sobald der Sitzbenutzer das Abstandsgebilde komprimiert und die Luft aus dem Inneren der fluiddichten Hülle zumindest teilweise verdrängt hat. Durch das reduzierte Luftvolumen im Inneren der fluiddichten Hülle kann sich das Abstandsgebilde bei Entlastung infolge der eingezogenen Hülle nicht wieder in seine Ausgangsform zurückbilden, so dass die Kontur des Abstandsgebildes fixiert wird.

Alternativ kann erfindungsgemäß an eine oder an mehrere Auflagen eine Fördereinrichtung angeschlossen sein, mit der ein Fluid aus dem Inneren der Auflage(n) abgezogen werden kann (Saugpumpe). Durch den Unterdruck im Inneren der Auflage(n) wird eine verbesserte Konturanpassung der Auflage(n) während des Einsitzens des Sitzbenutzers erreicht. Auch bleibt bei angelegtem Unterdruck die Kontur der Auflage(n) nach dem Verlassen des Sitzes besser erhalten als dies ohne Fördereinrichtung der Fall ist. Außerdem kann erfindungsgemäß durch das Maß des Unterdruckes bei besetztem Sitz die Härte der Auflage(n) reguliert werden. Hierdurch kann beispielsweise eine Konfiguration der Sitzhärte in der Abstufung "Komfort" - "Normal" - "Sport" realisiert werden. Grundsätzlich ist mit einem größeren Unterdruck eine größere Härte der Auflage(n) verbunden, da der Unterdruck die Hülle der Auflage(n) stärker zusammenzieht, wodurch das elastische Abstandsgebilde komprimiert wird.

Andererseits kann mittels einer Fördereinrichtung ein Fluid in das Innere der Auflage(n) eingebracht werden (Druckpumpe). Hierdurch wird eine schnellere und vollständigere Rückstellung der Auflage(n) in ihre ursprüngliche unkonturierte Form bei unbesetztem Sitz erreicht als dies bei einer Selbstrückstellung der Auflage(n) nach Beendigung der Belastung durch den Sitzbenutzer der Fall ist. Ferner kann durch eine als Druckpumpe arbeitende Fördereinrichtung ein Überdruck in der Auflage bzw. in den Auflagen erzeugt werden, um die Anlagefläche partiell zu verhärten und/oder eine Stellbewegung in Richtung des Sitzbenutzers zu erzeugen. Durch diese Körperstützungsfunktion kann beispielsweise eine Lordosenstütze erzeugt werden. Auch können durch eine komplexere Ansteuerung einer oder mehrerer Fördereinrichtungen in Verbindung mit einer Mehrzahl von Auflagen Massage- und Mobilisierungseffekte erzeugt werden.

Bei dem Fluid handelt es sich bevorzugt um Luft. Die Auflage kann bzw. die Auflagen können jedoch auch mit einem anderen Fluid als Luft, beispielsweise mit einem Gemisch aus Wasser und Ethylenglykol oder mit einer ölartigen Flüssigkeit geringer Viskosität, befüllt sein.

Das Fluid, insbesondere ein flüssiges Medium, kann temperiert werden, so dass durch das angewärmte bzw. gekühlte Fluid zumindest in der Phase des Einsitzens ein Komfortgewinn für den Sitzbenutzer erreicht wird.

In weiterer Ausgestaltung der Erfindung kann in zumindest einer Schlauchleitung einer Auflage ein Drucksensor vorgesehen sein, um in Verbindung mit einer Steuerungs- oder Regelungseinheit gezielt den Fluiddruck im Inneren der Hülle zu steuern bzw. zu regeln. Hierdurch kann die Konturanpassung der Auflage an den Sitzbenutzer weiter verbessert werden. Außerdem können hierdurch die bereits oben erwähnten Körperunterstützungs-, Massage- und/oder Mobilisierungsfunktionen realisiert werden. Bei Massageeinrichtungen können mittels einer Steuerungs- oder Regelungseinheit unterschiedliche Funktionsmuster, beispielsweise eine in Längs- oder Höhenrichtung des Sitzes verlaufende Massagewelle, realisiert werden. Bevorzugt werden die Funktionsmuster periodisch wiederholt.

Soweit eine Fördereinrichtung vorgesehen ist, wirkt diese bevorzugt auf alle oder zumindest auf eine Mehrzahl der Auflagen. Die Auflagen sind über Schlauchleitungen und gegebenenfalls Ventile mit der Fördereinrichtung verbunden.

Zwar ist aus der DE 102 40 462 A1 ein Sitz mit einem Einleger aus einem drucksteifen Abstandstextil, insbesondere einem Abstandsgewirke, bekannt. Die Auflage für den Sitz wird jedoch von einer herkömmlichen Polsterunterkonstruktion aus Schaumstoff, Gummihaar oder dergleichen gebildet.

Die Auflage bedeckt vollständig oder zumindest nahezu vollständig den gesamten Bereich der Sitzfläche und/oder der Rückenlehne der Tragstruktur und bildet somit die unmittelbare Stützfläche für den Sitzbenutzer. Zur Erhöhung des Sitzkomforts sind bevorzugt mehrere Auflagen vorgesehen, die zusammen den Bereich der Sitzfläche und der Rückenlehne abdecken.

In einer Ausführungsform der Erfindung ist der Bereich der Sitzfläche in wenigstens zwei, bevorzugt in drei hintereinander angeordnete Auflagen untergliedert. In analoger Weise ist der Bereich der Rückenlehne beispielsweise in drei Auflagen übereinander untergliedert. Grundsätzlich kann auch eine höhere oder eine geringere Anzahl von Auflagen gewählt werden.

Die Auflagen können in der Breitenerstreckung der Sitzfläche und/oder der Rückenlehne unterteilt sein, so dass sich eine Rechts-/Links-Unterteiluηg ergibt, wodurch für die beiden Körperhälften eine individuelle Sitzanpassung erfolgen kann. Selbstverständlich kann zur Optimierung der Konturanpassung auch eine feinere Unterteilung gewählt werden, unter Abwägung mit den damit verbundenen Kosten,

In einer vereinfachten Ausführungsform der Erfindung kann je Körperhälfte im Bereich der Sitzfläche und/oder der Rückenlehne nur eine einzige Auflage vorgesehen sein.

Die Auflage weist auf ihrer Außenseite eine Deckschicht auf, die der Deckschicht bekannter Auflagen entspricht, also aus einem textilen Material, aus Leder oder dergleichen besteht. Zur Erhöhung des Sitzkomforts kann unterhalb der Auflage eine Hinterfütterung aus einem nachgiebigen Material, wie beispielsweise eine Schaumstoffschicht, vorgesehen sein.

Mögliche Ausführungsbeispiele der Erfindung sind in der Zeichnung dargestellt und werden nachfolgend näher erläutert. Es zeigt:
- Fig. 1: eine Auflage für einen erfindungsgemäßen Sitz in schematischer Schnittdarstellung,
- Fig. 2: einen unbesetzten Sitz mit erfindungsgemäßen Auflagen -in schematischer Seitenansicht,
- Fig. 3: den Sitz von Fig. 2 unter Belastung durch einen Sitzbenutzer und
- Fig. 4: den Sitz von Fig. 2 in schematischer Perspektivdarstellung, mit zusätzlichen Steuerungselementen.

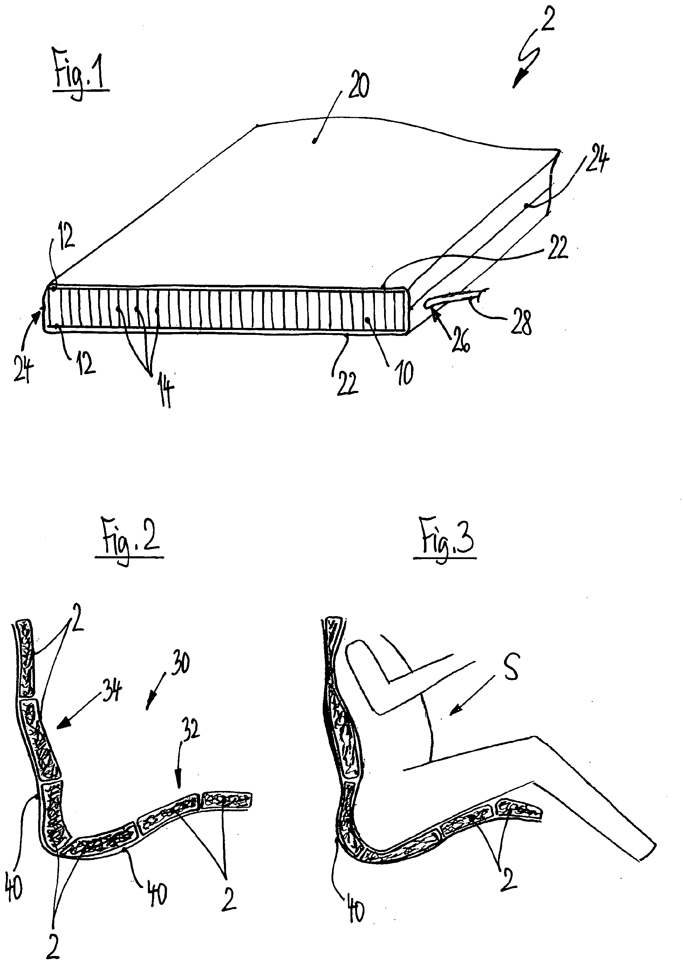

Fig. 1 zeigt den Aufbau einer erfindungsgemäßen Auflage 2 für einen in seiner Gesamtheit mit 30 bezeichneten Sitz (siehe Fig. 2). Die Auflage 2 setzt sich aus einem Abstandsgebilde 10 und einer Hülle 20 zusammen. Das an sich bekannte Abstandsgebilde 10 weist eine obere und eine untere Lage 12 auf (jeweils als Gewirkelage ausgebildet), zwischen denen Abstandsfäden 14 angeordnet sind.

Derartige Abstandsgebilde 10 sind als handelsübliche Produkte beispielsweise der Firma Müller Textil GmbH erhältlich. Für die nachfolgend beschriebene Erfindung ist die konkrete Ausführung des Abstandsgebildes 10 ohne Bedeutung.

Das Abstandsgebilde 10 ist in eine in ihrer Gesamtheit mit 20 bezeichnete fluiddichte Hülle eingebracht, so dass eine Art Blase mit einer versteifenden Einlage entsteht. Die Hülle 20 setzt sich aus einer oberen Materialbahn 22 und einer dazu parallelen unteren Materialbahn 22 zusammen. Die beiden Materialbahnen 22 sind an ihren Randbereichen umlaufend miteinander verschweißt (Schweißnaht 24) und schließen somit das Abstandsgebilde 10 luftdicht im Inneren der Hülle 20 ein. Die Hülle 20 weist einen Anschluss 26 für eine Schlauchleitung 28 auf.

Die Fig. 2 bis 4 zeigen einen Sitz 30, der mit einer Mehrzahl von Auflagen 2 versehen ist. Der Sitz 30 ist in einen Bereich der Sitzfläche 32 und in einen Bereich der Rückenlehne 34 unterteilt. Die tragende Struktur des Sitzes 30 wird von einer einteiligen Tragstruktur 40 gebildet, die übergangslos die beiden Bereiche 32 und 34 miteinander verbindet. Die Tragstruktur 40 ist dreidimensional konturiert. In den Bereichen der Sitzfläche 32 und der Rückenlehne 34 sind mehrere Auflagen 2 vorgesehen, so dass die Kontur in den verschiedenen Abschnitten, in denen der Körper eines Sitzbenutzers S am Sitz 30 anliegt, individuell angepasst werden kann. Grundsätzlich sind die rechte Hälfte R und die linke Hälfte L des Sitzes 30 spiegelbildlich aufgebaut. Sowohl der Bereich der Sitzfläche 32 als auch der Bereich der Rückenlehne 34 ist horizontal und vertikal in jeweils drei Bereiche unterteilt, so dass sich insgesamt eine Unterteilung in zwölf Auflagen 2 ergibt. Die Sitzfläche 32 ist hierbei in einen vorderen Bereich V, einen mittleren Bereich M und einen hinteren Bereich H untergliedert. Dementsprechend erfolgt eine Aufteilung der Rückenlehne 34 in einen unteren Bereich U, einen mittleren Bereich M und einen oberen Bereich O. Optional sind Auflagen 2 in den seitlichen Wangenbereichen W möglich, sowohl im Bereich der Sitzfläche 32 als auch im Bereich der Rückenlehne 34, wie mit gestrichelten Linien dargestellt.

Fig. 2 zeigt die Auflagen 2 im unbelasteten Ausgangszustand, mit geöffnetem Anschluss 26, so dass im Inneren der Auflagen 2 Umgebungsdruck herrscht. Die der Tragstruktur 40 des Sitzes 30 abgewandten oberen Materialbahnen 22 der Auflagen 2 verlaufen in etwa parallel zur Kontur der Tragstruktur 40.

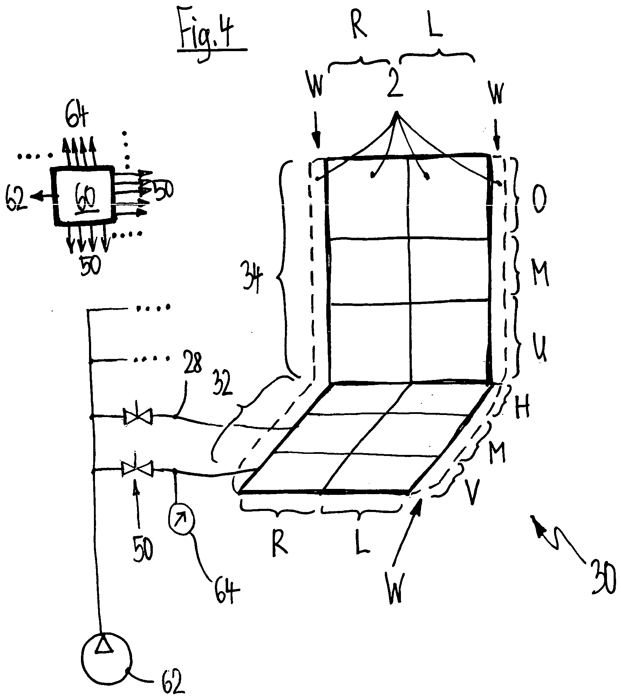

Wie aus Fig. 3 hervorgeht, werden bei Belastung durch einen Sitzbenutzer S die Auflagen 2 einschließlich der innen liegenden Abstandsgebilde 10 zusammengedrückt, in jeweils unterschiedlichem Maß, je nach lokal vom Sitzbenutzer S aufgebrachtem Anlagedruck. Hierbei wird das Volumen der Hülle 20 verringert und ein Teil der sich im Inneren der Hülle 20 befindlichen Luft über den Anschluss 26 und die Schlauchleitung 28 aus der Hülle 20 herausgedrückt. Dieser Zustand der komprimierten Auflage 20 kann durch Verschließen einer Absperreinrichtung 50 (siehe Fig. 4) fixiert werden, indem aufgrund der reduzierten Luftmenge im Inneren der Hülle 20 nach dem Verlassen des Sitzes 30 durch den Sitzbenutzer S eine Rückdehnung auf das ursprüngliche Volumen nicht möglich ist. Damit steht ein Sitz 30 zur Verfügung, dessen Anlageflächen auch ohne Sitzbelegung exakt der durch den Sitzbenutzer S vorgegeben Kontur entsprechen.

Soll ein anderer Sitzbenutzer S auf dem Sitz 30 Platz nehmen, werden die Absperreinrichtungen 50 geöffnet, so dass sich im Inneren der Auflagen 2 der Umgebungsluftdruck einstellt und die Auflagen 2 ihre Ausgangslage, wie in Fig. 2 dargestellt, einnehmen.

Wie aus dem Ausführungsbeispiel der Fig. 4 hervorgeht, werden die Absperreinrichtungen 50 von einer Steuereinheit 60 angesteuert. Außerdem ist eine als Pneumatikpumpe ausgebildete Fördereinrichtung 62 vorgesehen, durch die der Druck im Inneren der Auflagen 2 verändert werden kann. Im dargestellten Ausführungsbeispiel ist für jede Auflage 2 eine separate Absperreinrichtung 50 vorgesehen, so dass die jeweiligen Auflagen 2 einzeln und unabhängig voneinander angesteuert werden können. Zusätzlich können an den Schlauchleitungen 28 Drucksensoren 64 zur Erfassung des Drucks im Innern der Auflagen 2 vorgesehen sein. Damit kann ein Signal, das den Druck im Inneren der Auflagen 2 repräsentiert, der Steuereinheit 60 als Regelgröße zugeführt werden, um beispielsweise in Abhängigkeit vom Gewicht eines Sitzbenutzers 2 eine individuelle Einstellung der Sitzhärte vornehmen zu können.

Zusammenfassend lässt sich die Erfindung wie folgt beschreiben: Ein Sitz 30 setzt sich aus einer Tragstruktur 40 und einer Mehrzahl von Auflagen 2 zusammen. Die Auflagen 2 überdecken den gesamten Bereich der Sitzfläche 32 und der Rückenlehne 34 des Sitzes 30. Jede der Auflagen 2 wird von einem textilen Abstandsgebilde 10 gebildet, das in einer fluiddichten Hülle 20 aufgenommen ist. Die Hülle 20 weist einen Anschluss 26 für eine Schlauchleitung 28 auf. Vor dem Einsitzen eines Sitzbenutzers S auf dem Sitz 30 ist die Schlauchleitung 28 zur Umgebungsluft offen. Unter der Krafteinwirkung durch den Sitzbenutzer S wird die Auflage 2 und damit das Abstandsgebilde 10 zusammendrückt, wobei gleichzeitig Luft aus dem Inneren der Auflage 2 verdrängt wird. Hierdurch erfahren die Auflagen 2 eine Konturierung entsprechend der Körperform des Sitzbenutzers S. Nach dem Einsitzen kann diese Konturierung der Auflagen 2 fixiert werden, indem eine Absperreinrichtung 50 in der Schlauchleitung 28 versperrt wird und somit das reduzierte Luftvolumen im Inneren der Auflage 2 von der Umgebungsluft getrennt wird. Auf diese Weise bleibt die Konturierung der Auflagen 2 des Sitzes 30 erhalten, wenn der Sitzbenutzer S den Sitz 30 verlassen hat.

## Patentansprüche

1. Sitz (30) mit wenigstens einer Auflage (2), wobei die Auflage (2) auf einer ungepolsterten Tragstruktur (40) des Sitzes (30) angeordnet ist, wobei die Auflage (2) folgende Bestandteile aufweist:- ein Abstandsgebilde (10), dessen parallel zueinander angeordnete Lagen (12) durch Abstandsfäden (14) miteinander verbunden sind,- eine fluiddichte Hülle (20) zur Aufnahme des Abstandsgebildes (10), wobei die Hülle (20) im Wesentlichen aus zwei etwa parallel zueinander angeordneten Materialbahnen (22) besteht, die an ihren seitlichen Randbereichen miteinander verbunden sind und- wenigstens einen Anschluss (26), über den die Menge des Fluids im Inneren der Hülle (20) beeinflussbar ist, wobei der Anschluss (26) mit einer Absperreinrichtung (50) versehen ist und/oder an eine Fördereinrichtung (62) zur Zufuhr von Fluid in die Auflage (2) bzw. zum Entfernen von Fluid aus der Auflage (2) angeschlossen ist, so dass nach erfolgter Belastung durch einen Sitzbenutzer der Anschluss (26) absperrbar ist bzw. ein Unterdruck im Inneren der Hülle (20) aufbringbar ist, wobei durch das Maß des Unterdruckes bei besetztem Sitz die Härte der Auflage (2) regulierbar ist, wobei mit einem größeren Unterdruck eine größere Härte der Auflage (2) verbunden ist.

2. Sitz (30) nach Anspruch 1,
**dadurch gekennzeichnet, dass** der Anschluss (26) mit einem Sensor (64) zur Erfassung des in der Auflage (2) herrschenden Drucks des Fluids verbunden ist.

3. Sitz (30) nach Anspruch 1 oder 2, **dadurch gekennzeichnet, dass** die Auflage (2) oder die Auflagen (2) einen wesentlichen Teil der Sitzfläche (32) und/oder der Rückenlehne (34) der Tragstruktur (40) des Sitzes (30) überdeckt bzw. überdecken.

4. Sitz (30) nach einem der vorgenannten Ansprüche,
**dadurch gekennzeichnet, dass** an der Sitzfläche (32) des Sitzes (30) wenigstens zwei hintereinander angeordnete Auflagen (2) und/oder an der Rückenlehne (34) des Sitzes (30) wenigstens drei übereinander angeordnete Auflagen (2) vorgesehen sind.

5. Sitz (30) nach einem der vorgenannten Ansprüche,
**dadurch gekennzeichnet, dass** an der Sitzfläche (32) und/oder an der Rückenlehne (34) des Sitzes (30) wenigstens zwei Auflagen (2) nebeneinander vorgesehen sind.

6. Sitz (30) nach einem der vorgenannten Ansprüche,
**dadurch gekennzeichnet, dass** die Auflage (2) auf ihrer einem Sitzbenutzer (S) zugewandten Materialbahn (22) eine Deckschicht aus einem textilen Material, aus Leder oder dergleichen aufweist.

7. Sitz (30) nach Anspruch 6,
**dadurch gekennzeichnet, dass** die Auflage (2) unterhalb der Deckschicht eine Hinterfütterung aus einem nachgiebigen Material aufweist.

8. Verfahren zur Anpassung der Kontur eines Sitzes (30) nach einem der vorgenannten Ansprüche, mit wenigstens einer mit Luft befüllten Auflage (2), die mit einer Absperreinrichtung (50) verbunden ist, wobei - vor dem Einsitzen eines Sitzbenutzers (S) die Absperreinrichtung (50) geöffnet wird, so dass ein Ausgleich mit der Umgebungsluft stattfindet, - nach erfolgtem Einsitzen des Sitzbenutzers (S) die Absperreinrichtung (50) geschlossen wird und wobei - durch das Maß des Unterdruckes bei besetztem Sitz die Härte der Auflage (2) reguliert werden kann, wobei mit einem größeren Unterdruck eine größere Härte der Auflage (2) verbunden ist.

9. Verfahren nach Anspruch 8,
**dadurch gekennzeichnet, dass** die Absperreinrichtung (50) vor dem Einsitzen eines weiteren Sitzbenutzers (S) geöffnet wird.

10. Verfahren zur Anpassung der Kontur eines Sitzes (30) nach einem der Ansprüche 1 bis 7, mit wenigstens einer Auflage (2), die mit einer Fördereinrichtung (62) für ein Fluid verbunden ist, wobei - vor dem Einsitzen eines Sitzbenutzers (S) die Auflage (2) mit dem Fluid befüllt ist, - nach dem Einsitzen des Sitzbenutzers (S) die Fördereinrichtung (62) das Fluid zumindest teilweise aus der Auflage (2) entfernt, - der Zustand der reduzierten Fluidmenge durch Schließen einer Absperreinrichtung (50) oder durch Absperren mittels der Fördereinrichtung (62) beibehalten wird und wobei - durch das Maß des Unterdruckes bei besetztem Sitz die Härte der Auflage (2) reguliert werden kann, wobei mit einem größeren Unterdruck eine größere Härte der Auflage (2) verbunden ist.

11. Verfahren nach Anspruch 10,
**dadurch gekennzeichnet, dass** die Absperreinrichtung (50) vor dem Einsitzen eines weiteren Sitzbenutzers geöffnet (S) wird und/oder die Fördereinrichtung (62) Fluid in die Auflage (2) einbringt.

12. Verfahren nach Anspruch 10 oder 11,
**dadurch gekennzeichnet, dass** die Menge des aus der Auflage (2) zu entfernenden Fluids einstellbar ist, um die Härte der Auflage (2) zu verändern.

13. Verfahren nach einem der Ansprüche 10 bis 12,
**dadurch gekennzeichnet, dass** zur Erzeugung einer Stützwirkung für eine Körperpartie des Sitzbenutzers (S) das Fluid mit Überdruck in die Auflage (2) eingebracht wird.

14. Verfahren nach einem der Ansprüche 10 bis 12,
**dadurch gekennzeichnet, dass** zur Erzeugung einer Massage- und/oder Mobilisierungswirkung für eine Körperpartie des Sitzbenutzers (S) das Fluid in die Auflage (2) periodisch variierend eingebracht und aus der Auflage (2) periodisch variierend entfernt wird.

## Claims

1. A seat (30) having at least one cushion part (2), wherein the cushion part (2) is arranged on a non-upholstered supporting structure (40) of the seat (30), wherein the cushion part (2) has the following components: - a spacer structure (10), the layers (12) of which are arranged parallel to each other are joined together by spacer threads (14), - a fluid-tight cover (20) for receiving the spacer structure (10), wherein the cover (20) comprises substantially two webs of material (22) arranged approximately parallel to each other which are joined together on their lateral edge regions, and - at least one connector (26), via which the quantity of the fluid in the interior of the cover (20) can be influenced, wherein the connector (26) is provided with a shut-off means (50) and/or is connected to a conveying means (62) for supplying fluid into the cushion part (2) or for removing fluid from the cushion part (2), so that once loading by a seat user has taken place the connector (26) can be shut off or a partial vacuum can be applied in the interior of the cover (20), wherein the hardness of the cushion part (2) can be regulated by the extent of the partial vacuum when the seat is occupied, wherein a greater hardness of the cushion part (2) is linked with a greater partial vacuum.

2. A seat (30) according to Claim 1,
**characterised in that** the connector (26) is connected to a sensor (64) for detecting the pressure of the fluid in the cushion part (2).

3. A seat (30) according to Claim 1 or Claim 2,
**characterised in that** the cushion part (2) or the cushion parts (2) covers or cover a substantial portion of the sitting surface (32) and/or the backrest (34) of the supporting structure (40) of the seat (30).

4. A seat (30) according to one of the aforesaid claims,
**characterised in that** at least two cushion parts (2) arranged one behind another are provided on the sitting surface (32) of the seat (30), and/or at least three cushion parts (2) arranged one above another are provided on the backrest (34) of the seat (30).

5. A seat (30) according to one of the aforesaid claims,
**characterised in that** at least two cushion parts (2) are provided next to one another on the sitting surface (32) and/or on the backrest (34) of the seat (30).

6. A seat (30) according to one of the aforesaid claims,
**characterised in that** the cushion part (2) has on its web of material (22) facing a seat user (S) a top layer made of a textile material, leather or the like.

7. A seat (30) according to Claim 6,
**characterised in that** the cushion part (2) has a back lining made of a resilient material below the top layer.

8. A method for adapting the contour of a seat (30) according to one of the aforesaid claims, with at least one air-filled cushion part (2) which is connected to a shut-off means (50), wherein - prior to a seat user (S) sitting in the seat the shut-off means (50) is opened, so that compensation with the ambient air takes place, - once the seat user (S) has sat in the seat the shut-off means (50) is closed and wherein - the hardness of the cushion part (2) can be regulated by the extent of the partial vacuum when the seat is occupied, wherein a greater hardness of the cushion part (2) is linked with a greater partial vacuum.

9. A method according to Claim 8,
**characterised in that** the shut-off means (50) is opened prior to a further seat user (S) sitting in the seat.

10. A method for adapting the contour of a seat (30) according to one of Claims 1 to 7, with at least one cushion part (2) which is connected to a conveying means (62) for a fluid, wherein - prior to a seat user (S) sitting in the seat the cushion part (2) is filled with the fluid, - once the seat user (S) has sat in the seat the conveying means (62) removes the fluid at least partially from the cushion part (2), - the state of the reduced quantity of fluid is maintained by closing a shut-off means (50) or by shutting-off by means of the conveying means (62), and wherein - the hardness of the cushion part (2) can be regulated by the extent of the partial vacuum when the seat is occupied, wherein a greater hardness of the cushion part (2) is linked with a greater partial vacuum.

11. A method according to Claim 10,
**characterised in that** the shut-off means (50) is opened prior to a further seat user (S) sitting in the seat and/or the conveying means (62) introduces fluid into the cushion part (2).

12. A method according to Claim 10 or Claim 11,
**characterised in that** the quantity of the fluid to be removed from the cushion part (2) is adjustable in order to change the hardness of the cushion part (2).

13. A method according to one of Claims 10 to 12,
**characterised in that** in order to generate a supporting action for a body part of the seat user (S) the fluid is introduced into the cushion part (2) with excess pressure.

14. A method according to one of Claims 10 to 12,
**characterised in that** in order to produce a massage and/or mobilising action for a body part of the seat user (S) the fluid is introduced into the cushion part (2) in periodically varying manner and is removed from the cushion part (2) in periodically varying manner.

## Revendications

1. Siège (30) équipé d'au moins un garnissage (2), ce garnissage (2) étant monté sur une structure support non équipée de coussins (40) du siège (30), et comprenant les composants suivants :
un élément d'écartement (10) dont les couches (12) parallèles l'une à l'autre sont reliées par des brins d'écartement (14), une enveloppe étanche aux fluides (20) destinée à recevoir l'élément d'écartement (10), cette enveloppe (20) étant essentiellement constituée de deux nappes de matériau (22) approximativement parallèles reliées au niveau de leurs zones de bord, et au moins un raccord (26) permettant de faire varier la quantité de fluide à la partie interne de l'enveloppe (20), ce raccord (26) étant équipé d'un dispositif de blocage (50) et/ou étant connecté à un dispositif de refoulement (62) permettant d'introduire du fluide dans le garnissage (2) ou de l'en extraire de sorte que, après l'application d'une charge par un utilisateur du siège, le raccord (26) puisse être bloqué, ou qu'une dépression puisse être établie à la partie interne de l'enveloppe (20), la valeur de la dépression permettant de réguler la dureté du garnissage (2) lorsque le siège est occupé, et une plus grande dureté du garnissage (2) plus importante étant liée à une dépression.

2. Siège (30) conforme à la revendication 1,
**caractérisé en ce que**
le raccord (26) est relié à un capteur (64) permettant de détecter la pression du fluide dans le garnissage (2).

3. Siège (30) conforme à la revendication 1 ou 2,
**caractérisé en ce que**
le garnissage (2) ou les garnissages (2) recouvre(nt) une partie importante de la surface d'assise (32) et/ou du dossier (34) de la structure support (40) du siège (30).

4. Siège (30) conforme à l'une des revendications précédentes,
**caractérisé en ce qu'**
il est prévu, sur la surface d'assise (32) du siège (30) au moins deux garnissage (2) situés l'un derrière l'autre, et/ou sur le dossier (34) du siège (30) au moins trois garnissages (2) situés les uns sur les autres.

5. Siège (30) conforme à l'une des revendications précédentes,
**caractérisé en ce qu'**
il est prévu sur la surface d'assise (32) et/ou sur le dossier (34) du siège (30) au moins deux garnissages (2) situés côte à côte.

6. Siège (30) conforme à l'une des revendications précédentes,
**caractérisé en ce que**
le garnissage (2) comporte, sur sa nappe de matériau (22) tournée vers l'utilisateur du siège (S) une couche de recouvrement en un matériau textile, en cuir ou similaire.

7. Siège (30) conforme à la revendication 6,
**caractérisé en ce que**
le garnissage (2) comporte au-dessous de la couche de recouvrement, un rembourrage arrière en un matériau flexible.

8. Procédé permettant d'adapter le contour d'un siège (30) conforme à l'une des revendications précédentes, équipé d'au moins un garnissage (2) rempli d'air qui est relié à un dispositif de blocage (50), selon lequel, avant qu'un utilisateur du siège (S) s'assoie, le dispositif de blocage (50) est ouvert de façon à obtenir un équilibrage avec l'air ambiant, après que l'utilisateur (S) se soit assis, le dispositif de blocage (50) est fermé, et la dureté du garnissage (2) peut être réglée par la valeur de la dépression lorsque le siège est occupé, une plus grande dureté du garnissage (2) étant liée à une dépression plus importante.

9. Procédé conforme à la revendication 8,
**caractérisé en ce que**
le dispositif de blocage (50) est ouvert avant qu'un autre utilisateur du siège (S) s'assoie.

10. Procédé permettant d'adapter le contour d'un siège (30) conforme à l'une des revendications 1 à 7, équipé d'au moins un garnissage (2) qui est relié à un dispositif de refoulement (62) d'un fluide, selon lequel - avant qu'un utilisateur du siège (S) s'assoie, le garnissage (2) est rempli de fluide, - après que l'utilisateur du siège (S) se soit assis, le dispositif de refoulement (62) extrait au moins en partie le fluide du garnissage (2), - l'état de quantité de fluide réduite étant maintenu par fermeture d'un dispositif de blocage (50) ou par blocage au moyen du dispositif de refoulement (62), et, la valeur de la dépression lorsque le siège est occupé permet de réguler la dureté du garnissage (2), une plus grande dureté du garnissage (2) étant liée à une dépression plus importante.

11. Procédé conforme à la revendication 10,
**caractérisé en ce que**
le dispositif de blocage (50) est ouvert avant qu'un autre utilisateur du siège (S) s'assoie et/ou le dispositif de refoulement (62) introduit du fluide dans le garnissage (2).

12. Procédé conforme à la revendication 10 ou 11,
**caractérisé en ce que**
la quantité de fluide devant être extraite du garnissage (2) peut être réglée pour modifier la dureté du garnissage (2).

13. Procédé conforme à l'une des revendications 10 à 12,
**caractérisé en ce que**
pour obtenir une action d'appui sur une partie du corps de l'utilisateur du siège (S) le fluide est introduit en surpression dans le garnissage (2).

14. Procédé conforme à l'une des revendications 10 à 12,
**caractérisé en ce que**
pour obtenir une action de massage et/ou de mobilisation d'une partie du corps de l'utilisateur du siège (S), le fluide est introduit avec une variation périodique dans le garnissage (2) et en est extrait avec une variation périodique.
